# EUROPEAN PATENT APPLICATION

(11) **EP 1 990 762 A1**
(43) Date of publication of application: **12.11.2008**
(21) Application number: 07290578.9
(22) Date of filing: 07.05.2007
(51) Int. Cl.: G06Q 30/00, H04L 29/06, H04N 7/173

(54) **A system and associated method for selecting advertisements**

(71) Applicant: Alcatel Lucent, 75008 Paris (FR)
(72) Inventor: Toms, Yann, 75014 Paris (FR); Senot, Christophe, 75013 Paris (FR); Aghasaryan, Armen, 91600 Savigny Sur Orge (FR); Bétge-Brezetz, Stèphane, 75015 Paris (FR)
(74) Representative: Plas, Axel Ivo Michel

(57) **Abstract**

The invention relates to the selection of personalized advertisements in a media delivery network (102). The advertisement selection system (101) selects advertisements based on the content of the media delivered to the user (103) and based on the user-profile of the user (103) requesting the media.

## Description

### Field of the Invention

The present invention generally relates to the selection of advertisements and more in particular to the personalization of selected advertisements in a media delivery network such as an IP television (IPTV) network or mobile TV/video.

### Background of the invention

Advertisements are a common way of generating additional income for a company. The advertiser attracts new customers or is able to sell new products to existing customers, and broadcasters or publishers receive additional revenue by offering advertisement space This enables a broadcaster to offer services to the public, which are funded partially or completely by the income generated through commercials. The Internet is an example of a medium where most content is offered for free. However, hosting websites and web services can become expensive due to hardware requirements for storage or bandwidth requirements. For instance, a search engine needs a large amount of storage capacity for storing an index of all known websites and large amounts of accessible bandwidth to receive numerous search queries, transmit results and subsequent pages of results. Because most search engines offer their services for free, they look for other ways of funding their operations.

One way to fund their operations, is by showing advertisements to a user performing a search. For instance, the AdWords system ( http://adwords.google.com/) of Google Inc. enables an advertiser to buy advertisement space on the Google search pages It allows an advertiser to select a set of keywords and a price the advertiser wants to pay for each time a person dicks on the advertisement. This way, the advertiser only pays for a person who is actually interested in the advertisement or is likely to be interested, and Google can generate revenue from searches. The AdSense^{™} system (https://www.google.com/adsense/) of Google Inc. enables website owners to show advertisements on their website, provided by Google based on the contents of the website. The AdWords and AdSehse^{™} systems include an auction of advertisements which selects those advertisements with the highest price per click or price per thousand impressions to be shown. An alternative to AdWords and AdSense are offered by Microsoft adCenter or Yahoo! Search Marketing.

The problem with the above described advertisement methods, is that the advertisements are selected on the keywords assigned to the advertisement. These keywords can then be found in search queries, results of searches or the contents of webpages. However, this does not take into account additional information related to the content. For instance, a web page can describe the plot of a movie, the keywords then relate to the plot. Other, information such as actors, producers, directors, theme song title, etc. however, are not avaitable as possible keywords if they are not explicitly mentioned on the webpage. In addition, the keywords are all of equal importance. This means that when multiple keywords match, there is no way of deciding which advertisement is more appropriate for the person performing the search or visiting the webpage.

Another problem with the above described advertisement methods is that a user may receive advertisements which correspond to the content but do not correspond to the interests of the user. For instance, the user may be browsing a website about comedy movies for a paper, but only have a real interest in action or adventure movies. The existing solutions cannot provide advertisements related to action or adventure movies if there is no reference to such movies on the website. In other words, existing solutions may fail to select advertisements that match the real interest of a user because the keywords for the searched content may not match the interest of the user.

It is an object of the present invention to offer a more fine-grained selection of advertisements to a user. It is another obtect of the present invention to provide a way of ordering advertisements. It is a further object of the present invention to personalize selected advertisements.

### Summary of the Invention

According to the present invention, the above drawbacks are resolved with an advertisement selection system for use in a media delivery network to select at least one advertisement comprising means for selecting at least one advertisement based on a set of at least one parameter indicative for targeted content in media to be delivered, characterized in that the system further comprises means for selecting the advertisement based on at least one element of a user profile of a user whereto the media will be delivered.

Indeed, by selecting the advertisement based on parameters describing the content requested by a user and elements that are drawn from a user profile, the system will find more personalized advertisements for a particular user. The elements from the user profile can be used for further fine-tunang, ordering and prioritizing of the selection to meet the interests of the user.

Various types of media delivery networks such as IPTV networks, the Internet, intranets, IP Multimedia Subsystem networks or even Digital Audio Broadcast (DAB) networks are able to deliver various types of media content such as audio, video, text or a combination thereof to a user who requested content. The requested content can for instance be a particular movie in a video-on-demand system, a particular website, a radio channel or a television channel. The user requesting the content is either a physical person, for instance someone surfing the Internet or using an IPTV set-top box, or a logical person such as a device or account used to send requests and receive the media content.

The parameters are used to define content and may be indicative for the category of content such as action, adventure, comedy, ... actors performing in the media content, the types of content such as cartoon, computer animation, movie, television series, etc, or the subject of the content, e.g. via keywords, metadata, etc. Similarly the user-profile elements define the interests of a user. For instance, a user-profile can contain an element describing the type of movie that is preferred by a user, an element indicating that a user likes audio and cartoons, hobbies of the user, demographic information related to the user. The user-profile elements may have been entered by the user, e.g. at the time of subscription, or may be the result of user behaviour monitoring or tracking by a service provider.

An optional feature of the advertisement selection system according to the present invention is that the system may comprise means for setting a weight for at least one parameter and/or at least one element of the user profile, the weight being indicative for the importance of the parameter or the element in the selection of at least one advertisement.

Weighted information can be used to prioritize the user profile elements and content indicative parameters that are used for advertisement selection. The weights can also be used to set an order in the selected advertisements for a particular user. The parameters related to the content can be ordered according to their importance by the operator due to the weight assigned to each parameter. The same goes for the elements in a user-profile, which can be ordered according to the weight. The advantage of the weighted information is that, when the combination of user profiles and content parameters is matched by several advertisements, it becomes possible to select the most relevant advertisement or the most suited advertisement to correspond to the content and the users interests.

It is noted that not all the elements of a user profile or parameters describing the content have to be weighted. For instance, the advertiser may add weight information to the movie category, but not to the list of actors or the advertiser may add a weight to the spare time interests of the user but not to their preference in type of media.

Another optional feature of the advertisement selection system according to the present invention is that the system further may comprise means to set a value for the advertisement.

The general purpose of advertisements is to generate revenue. Therefore, an advertiser can add a value to each advertisement. This value may be used as an offer from the advertiser for the price to pay each time the advertisement is displayed, i.e. the price per diffusion, or each time a user follows the advertisement. Generally, the value will be the price in a particular currency which is paid by the advertiser to the company who displays the advertisements. For instance, the advertiser pays a media delivery network operator each time the advertisement is shown. Alternatively, the value can be a reward for a user who hosts advertisements on his Personal media content such as a website. The value can then be a money value or may be a virtual value such as points collected with an online store for discounts, free time to use a niedle-on-demind service, etc

The value can also be used to generate an order amongst advertisements from different advertisers relating to the same combination of parameters and user-profile elements. For instance, the advertisements can be shown ordered according to the value set per display, starting with the most expensive advertisement. Alternatively, the system may be designed to show only one advertisement, in which case the advertisement with the highest value is selected and shown. In such case it can be beneficial to have a module which allows an advertiser to check if their value is high enough to have their advertisement displayed to the user.

An optional feature of the advertisement selection system according to the present invention is that the system further may comprise means to alter at least one parameter and/or at least one element.

An advertiser may be able to specify the targeted content or user profiles when he submits a new advertisement for distribution. The advertiser may also indicate weights or a value at that time in order for the advertisement to be displayed to the appropriate set of users. However, these settings may change over time. For instance, a first advertiser submits an advertisement and defines the value, targeted content and user-profiles. A second advertiser submits a different advertisement for the same targeted content and user-profiles but with a higher value. Thus, the second advertisement can receive preference over the first advertisement, which means the second advertisement is shown first in a list, or is the only advertisement shown to a user. By allowing an advertiser to change these parameters or user-profile elements, they can alter the targeted content or targeted profiles to ensure that their advertisement is shown to users. Alternatively, the advertiser can also be able to alter its value for the advertisement, which allows to retain the targeted content and user-profites and to reclaim the preference for its advertisement over other advertisements for the same targets.

Another optional feature of the advertisement selection system according to the present invention-is that the elements comprises one or more of the following:
- one or more elements indicative for the demographic information of the user;
- one or more elements indicative for the context of the user.

By including additional information such as demographic information or the context of the user in a user-profile, the advertiser can specify in more detail which user-profiles are targeted by a particular advertisement. Demographic information provides an advertiser with information such as age, gender, home location, ... which can be used to select appropriate advertisements. For instance, an adult person and a toddler can both be interested in cars and request a movie related to cars. For the adult, this can be an action movie with long car chases and for the toddler this can be a cartoon. Both share the same interest and watch similar content which leads to the same advertisement that is selected for them in a case where only a single criterion is used to select the advertisement. However, an advertisement for a particular brand of cars is not interesting for a toddler. Therefore, the information relating to age can be used to select a car advertisement for the adult and an advertisement for toy cars for the toddler, Similarly, information related to the location of a user can be used to select advertisements for companies near the advertiser or which can easily be accessed by public transport. In addition, the context information relates to the current context of the user, such as the actual location of the user, presence information indicating a user's availability for services or interaction with other users, etc. This type of information can be used in conjunction with the demographic information, for instance to determine if a user is actually at his home location, or to narrow the selected advertisements down to their actual location such as a holiday address.

Another optional feature of the advertisement selection system according to the present invention is that at least one parameter comprises one or more of the following:
- one or more keywords indicative for the content
- one or more meta-data describing additional information related to the content.
A media item is defined by various parameters, for instance a movie in a digital format typically has a resolution, a filename, a size in bytes, audio quality, etc. These parameters describe the digital media but do not describe the content of the media item. Parameters relating to the content of the media item can be specified with keywords and meta-data. The keywords relate to the content of the media itself, for instance the title of a movie, words describing the plot of the movie, words describing the major scene locations in the movie etc. The meta-data describe additional information related to the content, for instance names of actors performing in the media item, genre of the media item, producer, director, important dates during production of the media item, references to prequels or sequels, references to other items by the same director or producer or actors or musicians, etc. These parameters can be retrieved from central databases such as movie databases on the Internet for information relating to movies, compact disc databases for information relating to the songs of a particular artist, group or album, book databases for information relating to books, authors, etc. Additionally, some parameters can be defined by the general public, distributors of media content, operators of media delivery networks or other people involved in the creation, distribution and appreciation of media content.

An optional feature of the advertisement selection system according to the present invention is that the media delivery network is an IP television (IPTV) network.

An IPTV network is adapted to deliver audiovisual media to a large number of users. The media include audio, video and text in the form of live television broadcasts, regular television broadcasts, video on demand services, interactive television, etc. The media can be stored in the media delivery network, which is typically the case for media-on-demand or delivered from outside the IPTV network, such as regular television broadcasts which are obtained from the television broadcasting companies. This means that an IPTV network has important abilities to support advertisement according to the present invention. An IPTV network can reach a broad range of users, it can store information such as advertisements and a user can interact with an IPTV network. Thus, the IPTV network can advantageously be extended with the advertisement system according to the present invention.

An optional feature of the advertisement selection system according to the present invention is that the media delivery network is a mobile network.

Mobile networks and other types of networks can be used as alternative for IPTV networks. For instance, the Internet provides web content which can be either of the media types in an interactive way, an IP Multimedia Subsystem (IMS) network can provide audio, video and text messages to users, Local Area Networks can be used to transport media and delivery media to a user Generally, all of these networks provide similar functionality such as hosting of content, delivery of content and enabling interaction between content and a user. Consequentially, these network technologies can all benefit in the same way as an IPTV network from the inclusion of the present invention because the advertisements can be used to reduce the cost per view of media-on-demand content or the monthly or annual fee for digital television services, or fees for the use of services such as media transport in an IMS network, searches with search engines etc.

The objectives of the present invention are further realized by an advertisement selection method for sewing at least one advertisement in a media delivery network comprising selecting at least one advertisement based on a set of at least one parameter indicative for targeted content in media to be delivered and at least one element of a user profile of a user whereto the media will be delivered.

### Brief Description of the Drawings

Fig. 1 illustrates a functional block diagram of an embodiment of the advertisement selection system 101 according to the present invention, coupled to a media delivery network 102; and
Fig. 2 illustrates a graphical user interface that can be used by an advertiser to interact with an embodiment of the advertisement selection system 101 according to the present invention.

### Detailed Description of Embodiment(s)

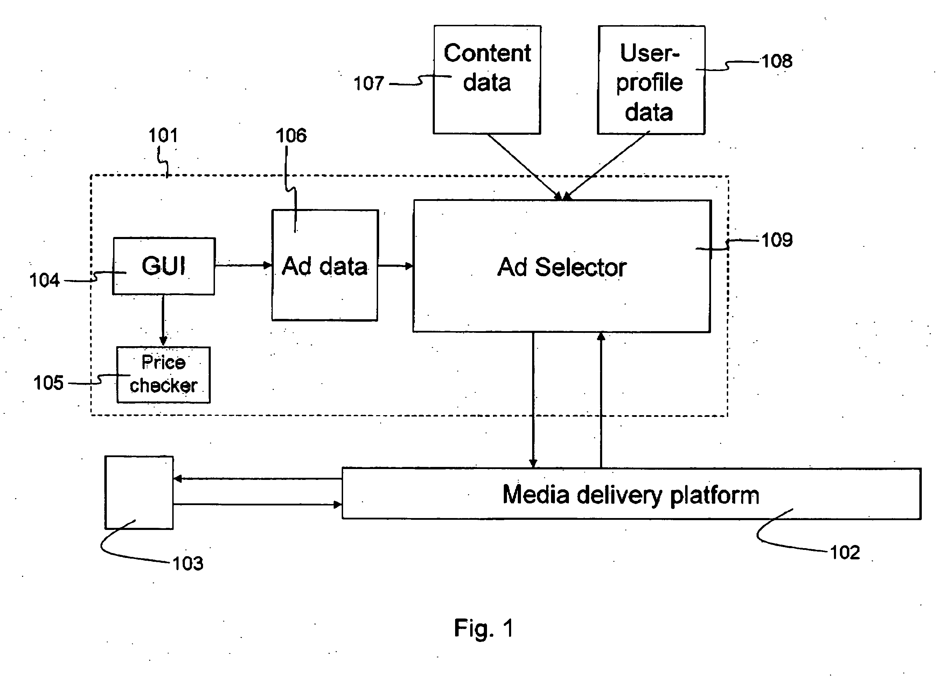

Fig. 1 shows a functional block diagram of an advertisement selection system 101 according to the present invention, coupled to a media delivery platform 102. As an example, the media delivery platform 102 can be supposed to be an IPTV network which is used to store and deliver media items to users connected to the IPTV network through a set-top box 103. The set-top box 103 enables a user to request media items and to receive media items from the IPTV network.

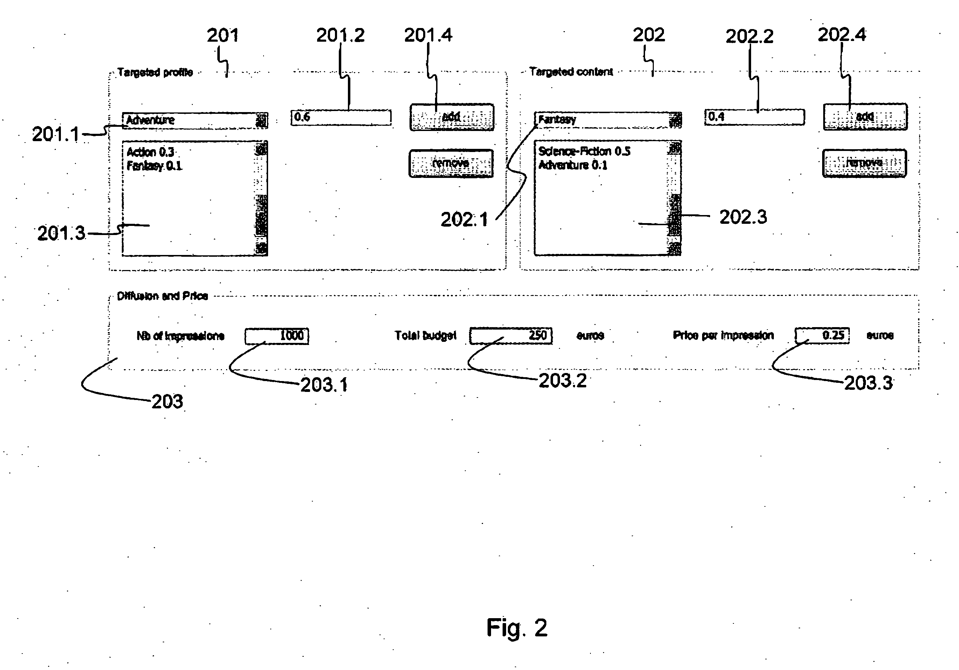

The advertisement selection system 101 consists of several modules. A first module is the Graphical User Interface (GUI) module 104, of which one possible layout is shown in Fig. 2. GUI module 104 can be used by an advertiser to define the targeted content and targeted user-profiles for a particular advertisement when the advertisement is submitted for the first time. By defining targeted content and the targeted user-profites the advertiser indicates that the advertisement is preferably shown to users corresponding to the targeted uaer-prbate that are looking for content corresponding to the targeted content. In addition, the GUI module 104 can be used by the advertiser to after the settings for a particular advertisement at a later time after submission. The GUI module 104 further allows an advertiser to determine the number of impressions for an advertisement and the price per impression that the advertiser wants to pay. An impression is one time where the advertisement is shown to a user. It may also be possible for the advertiser to increase or decrease the number of impressions and/or the price per impression at a later time or find out how many impressions are left using the GUI module 104. The GUI module 104 is linked to a price checker module 106 which can compare the price for a particular advertisement to the price of other advertisements originating from the same or other advertisers that target the same content and/or user-profiles. This enables advertisers to position their advertisements relative to other advertisements for the same targets. For instance, the advertiser can find out if his price is the highest price for a particular targeted profile and content to ensure that his advertisement is shown first, or to secure that his advertisement is shown when the system is configured to only show one advertisement.

Once the advertiser has configured the targeted profile and targeted content, has set a price, has checked the price for competing advertisements and is satisfied, the information is stored in the Ad data module 106. The ad data module 106 is a database wherein all information related to the advertisements is stored. The database 106 also includes the advertisement itself in this particular embodiment of the invention, but the advertisement can be stored in an external storage facility in another embodiment. The advertisement selection system 101 is further linked to a content database 107 which contains information related to all the media content that is stored in IPTV network 102. It contains keywords and meta-data for media items that can be requested by a user using their set-top box 103. The content database 107 is filled with information from various sources. Some of the keywords and meta-data can be defined by the creator of the media item, other keywords and meta-data can be defined by the IPTV network 102 operator, other keywords and meta-data may be retrieved from external sources such as internet based information databases about movies or suggestions for keywords, and meta-data can also be made by the users through set-top box 103. The advertisement selection system 101 is also connected to a user-profile database 108. This database 108 contains the information related to each user-profile and can be queried by the advertisement selection system 101 to retrieve relevant elements from the user-profile for a particular user. A user can either be a physical person registered for access to the media delivery platform 102 or a logical user such a set-top box 103 or account known to the media delivery platform 102. The user-profile information can be defined by the user himself and/or be updated by the media delivery platform 102 and/or the advertisement selection system 101 based on the usage statistics for the user. For instance, if a user requests several items with similar keywords or meta-data, the system can update the interests in the user-profile of that user with these keywords or meta-data. In other words, the system can leam from the habits and requests from a user and update the profile for the user in the user-profile database 108 accordingly. However, dynamic updates of a profile can be disabled or are not mandatory for the advertisement selection system 101 to operate in accordance with the current invention.

The advertisement selection system 101 further contains an ad selector module 109. This module 109 receives an identification of the requested media content from the media delivery platform 102. The ad selector module 109 can use this identification to retrieve the keywords, meta-data and other related information from the content database 107. The ad selector module 109 also receives an identification of the user who requested the media content. Using the identification of the user, ad selector module 109 can retrieve the profile information including interests, demographic information and context information from the user-profile database 108. Based on the results from the content database 107 and the user-profile database 108, ad selector module 109 retrieves relevant advertisements from the Ad database 106. Additionally, the ad selector module 109 can update the status of the retrieved advertisement in the ad database 106, for instance by decreasing the number of impressions left or increasing the bill for the advertiser.

Although the modules are all drawn separately, they may be integrated into a single hardware and/or software solution. In addition, individual modules may be combined and still achieve the same results. For instance, the price checker module 105 can be integrated into the GUI module 104, content database 107 and user-profile database 108 can be combined into a single database or may even be combined with ad database 106.

Fig. 2 shows one possible embodiment of the graphical user interface (GUI) requested by GUI module 104 of Fig. 1. This GUI shows three large sections, the Targeted profile section 201, the Targeted content section 202 and the Diffusion and price section 203. Each of these sections can be used to define values for these criteria that are used when an advertisement has to be selected for a user who requested particular media content.

The Targeted profile section 201 shows a drop-down box 201.1 which enables an advertiser to select a value for an interest of a user. In this example, the values are for the genre of movies and other media content such as cartoons, television shows and series. Next to the drop-down box 201.1 is a text field 201.2 which can be used by an advertiser to set the weight for a particular category. In addition, there is a display field 201.3 which shows the currently selected categories and their respective weights. Finally there is a button 201.4 which is used to add a category with its weight to the list for that particular advertisement. Similarly, the Targeted content section 202 has the same type of fields and buttons as section 201, but this time to describe the category of the content in the media that was requested by the user. Thus, there is a drop-down box 202.1 which can be used to select a category of media content, a text field 202.2 to set the weight for that category, a display field 202.3 showing the currently selected categories and their respective weight and a button 202.4 to add a new category with its respective weight.

The Diffusion and price section 203 consists of a text field 203.1 where an advertiser can enter the number of impressions for the advertisement. This determines how many times the advertisement will be shown to users before the budget runs out. Then there is a text field 263.2 where the advertiser can set the total budget for a particular advertisement. This is the total price that the advertiser will pay for showing the advertisement a set number of times. Finally there is a text field 203.3 which shows the price per impression for the particular advertisement. It may be possible for the advertiser to enter only two of these three fields and let the system calculate the third value. For instance, an advertiser can define the number of impressions and the total budget and let the system calculate the price per impression.

It should be noted that the GUI can have various additional buttons or fields to enter information. It may have a price check button to determine if the current price per impression is sufficient for the advertisement to be shown or a button to submit the entered values for a particular advertisement. There may be multiple parameters for the targeted content, for instance the category of a media item such as action, adventure, thriller, horror, etc. and the type of media item such as television series, movie, cartoon, etc. Similarly there may be more then one criterion in the user profile such as hobbies, interests in media content or categories, preference of media type such as audio or video, etc. Any of these or all of these can have a weight indication or the weight indication can be optional for any or all of these criteria

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shaft not be construed as limiting the respective claims concerned. The terms "first"; "second", third" and the like, when used in the description or in the claims are introduced to distinguish between similar elements or steps and are not necessarily describing a sequential or chronological order.

## Claims

1. An advertisement selection system (101) for use in a media delivery network (102) to select at least one advertisement comprising means for selecting said at least one advertisement based on a set of at least one parameter indicative for targeted content in media to be delivered,
**characterized in that** the means for selecting said at least one advertisement are adapted to also include at least one element of a user profile of a user (103) whereto said media will be delivered in the selection of said at least one advertisement.

2. The advertisement selection system (101) according to claim 1, **characterized in that** said system comprises means for setting a weight (201.2; 202.2) for said at least one parameter and/or said at least one element of said user profile, said weight being indicative for the importance of said parameter or said element in the selection of said at least one advertisement.

3. The advertisement selection system (101) according to claim 1, **characterized in that** said system further comprises means to set a value (203.2; 203.3) for said advertisement.

4. The advertisement selection system (101) according to claim 1, **characterized in that** said system further comprises means (104; 201, 202, 203) to alter said at least one parameter and/or said at least one element.

5. The advertisement selection system (101) according to claim 1, **characterized in that** said at least one element comprises one or more of the following:
- one or more elements indicative for the demographic information of said user, and
- one or more elements indicative for the context of said user.

6. The advertisement selection system (101) according to claim 1, **characterized in that** said at least one parameter comprises one or more of the following:
- one or more keywords indicative for said content; and
- one or more meta-data describing additional information related to said content.

7. The advertisement selection system (101) according to claim 1, **characterized in that** said media delivery network is an IP television (IPTV) network.

8. The advertisement selection system (101) according to claim 1, **characterized in that** said media delivery network is a mobile network.

9. An advertisement selection method for selecting at least one advertisement In a media delivery network (102) comprising selecting said at least one advertisement based on a set of at least one parameter indicative for targeted content in media to be delivered,
**characterized in that** the method further comprises selecting said at least one advertisement based on at least one element of a user profile of a user (103) whereto said media will be delivered.
